# EUROPEAN PATENT APPLICATION

(11) **EP 2 503 461 A2**
(43) Date of publication of application: **26.09.2012**
(21) Application number: 12156250.8
(22) Date of filing: 20.02.2012
(51) Int. Cl.: G06F 9/48

(54) **Method for handling exceptions in a computer program**

(30) Priority: 21.03.2011 IN DE07792011
(71) Applicant: Alcatel Lucent, 75007 Paris (FR)
(72) Inventor: Mudaraddi, Somashekhar, 560045 Bangalore (IN)
(74) Representative: Mouney, Jérôme

(57) **Abstract**

The present subject matter discloses a method and a system for handling exceptions in a program. In one implementation, a component of the program is analyzed to determine one or more exceptions. An interface header file associated with the component may then be analyzed to ascertain sections of code for which the one or more exceptions have been determined within the component. Based on the ascertained sections of code, any undefined exceptions from among the one or more exceptions are identified. The undefined exception may be defined, based on the identifying, by defining an exception handler for the at least one undefined exception in the program.

## Description

### FIELD OF INVENTION

The present subject matter relates to exception handling and, particularly but not exclusively, to exception handling in a program.

### BACKGROUND

A computer program is a sequence of codes written in a programming language to perform a specified task in a computing device, such as a computer and a laptop. The computer program, also referred to as a program, is initially compiled by a compiler of the computing device before being executed for performing the specified task. In order to ensure errorless and effective compilation of the program, detection and handling of exceptions that may occur during program execution, must be performed. An exception can be considered to be an event that occurs during the runtime of the program, which may result in disruption of the normal flow of the program execution. Exceptions may be caused due to many kinds of errors, for instance, resource unavailability or programming errors, such as trying to access an out-of-bounds array element. Without proper handling of the exception, the program may produce unexpected results or the execution of the program may halt abruptly, and in some cases may also affect the functionality of the computing devices on which the program is executed. An exception handling code, called exception handler, can be defined to resolve or handle the exceptions in the program.

Typically, an exception specification having a list of all exceptions in the program is prepared and provided by a programmer of the program. Based on the exception specification, relevant measures, such as defining the exception handler in the program can be implemented to handle all the exceptions listed in the exception specification. However, failure to either identify an exception or define an exception handler for the exceptions may result in compilation and/or run-time errors.

### SUMMARY

This summary is provided to introduce concepts related to exception handling in a program. This summary is not intended to identify essential features of the claimed subject matter nor is it intended for use in determining or limiting the scope of the claimed subject matter.

In an embodiment, a method of exception handling includes analyzing a component of the program to determine one or more exceptions. An interface header file associated with the component is analyzed to ascertain sections of code, of the component, for which the one or more exceptions have been determined. Further, any undefined exceptions from among the one or more exceptions are identified based on the ascertained sections of code. The undefined exceptions are defined by defining an exception handler for the at least one undefined exception in the program.

In another embodiment, an exception handling system for handling exceptions in a program is described. The exception handling system includes a processor and a memory coupled to the processor. The memory includes an exception identification module configured to determine one or more exceptions in components of the program. The exception handling system further includes an exception defining module configured to define, in the program, at least one undefined exception from among the one or more exceptions.

In accordance with another embodiment of the present subject matter, a computer readable medium having embodied thereon a computer program for executing a method is described. The computer readable medium perform acts including determining one or more exceptions in at least one component of the program. Further, the computer readable medium may also include identifying at least one undefined exception in the program from among the one or more exceptions. Furthermore, the computer readable medium may also perform the act of defining the at least one undefined exception in the program.

### BRIEF DESCRIPTION OF THE FIGURES

The detailed description is described with reference to the accompanying figures. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:

Figure 1 illustrates a system for handling exceptions in a program, in accordance with an embodiment of the present subject matter;

Figure 2 shows a method for handling exceptions in a program, according to an embodiment of the present subject matter;

Figure 3 illustrates a method for identifying exceptions in a program, in accordance with an embodiment of the present subject matter; and

Figure 4 illustrates another method for identifying exceptions in a program, according to an embodiment of the present subject matter.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

### DESCRIPTION OF EMBODIMENTS

The present subject matter relates to methods and systems for exception handling in a program written in a programming language, such as C++. Exception handling refers to handling of exceptions that are raised during execution of the program. A program can be understood as a sequence of codes written in a programming language to perform a specified task in a computing device, such as a computer and a laptop. A program typically includes one or more components that facilitate performing the specified task. A component may be understood as a framework having various sections of code defined for providing a predefined functionality to the program. Various components of a program accomplish one or more functionalities involved in the program, resulting in performance of the specified task. Thus, during execution of a program, typically, each of the components of the program is executed in a predefined order to perform the specified task.

Further, a program may be classified as a standalone program or a software tool. A standalone program may be understood as an independent program that does not depend on any other program for performing a specific task and is generally defined for a single predefined task, for example, a program for calculating attendance of employees in a company. A standalone program typically performs the predefined task by executing one or more functionalities or individual functions defined in the program itself For example, a program *'employee manager'* designed for managing employees of a company may include a function *reporting-time ()* for calculating reporting time of an employee in a company; and a function *expected-time ()* for calculating expected working hours of the employee in a month. The functions *reporting-time ()* and *expected-time ()* may be understood as components of the standalone program employee manager.

On the other hand, a program as a software tool or a software module may be understood as a program dependent on various other programs, where each program is generally defined for accomplishing a specific task, such that the software tool or the software module may execute multiple predefined tasks. A software tool is typically designed using various programs, each designed for particular functionality, and combines the functionalities of these programs to achieve its predefined task. For example, a program *'firm management system'* may be designed for a task of managing work in an organization. The task may further include functionalities, such as *employee management ()* that is provided by the abovementioned standalone program *'employee manager'* for managing employees of the company; and a functionality *account management ()* that may be provided by a standalone program *'account manager'* for managing accounts of the company. The standalone programs *employee manager* and *account manager* may be understood as components of the program *'firm management system'.* It will be apparent to one skilled in the art that these components may in themselves be standalone programs, software tools, software modules, functions, sections of codes and so on. Further, each of the components of a software tool is integrated together with the help of interface(s), such as an application programming interface (API). Interface(s) typically help in integrating various components with each other as well as integration of the various components with the program and thus facilitate smooth execution of the program.

As indicated previously, an exception is an anomaly that may occur during program execution. Without proper handling of the exception, the program may produce unexpected results or may halt abruptly during execution, or may affect the working of the computing device on which the program is executing. Thus, exceptions generally need to be defined for all the components within the program to ensure a smooth execution of the program.

Exception handling for programs written in various programming languages typically involves providing a set of predefined exceptions for one or more components of a program which may throw an exception and defining an exception handler for the predefined exceptions. Such predefined exceptions can be specified using a standard header such as *<exception.h>.* The standard header can be defined to support the exceptions that have been identified and defined within programming language libraries. Additionally, a programmer of the program may also define new exceptions during programming and add them to the standard header. A compiler may then execute all the exceptions during compilation of the program. However, this approach requires that the exceptions be identified and their corresponding exception handlers be defined the program.

Other conventional approaches for handling exceptions include defining exception handlers that are configured to resolve or handle the exceptions. In such cases, programmers generally may follow a try/catch paradigm for defining the exception handler. The try/catch paradigm involves providing a try block before a particular section of code of a program where an exception may occur, and following the section of program with a catch block that transfers the program control to an exception handler. During compilation of the program, if the compiler comes across a try block before a particular section of code, the compiler understands that an exception might occur in the particular section of code and inspects the section of code to see if an exception has been thrown by the section of code. If an exception occurs, in other words if an exception is thrown, the thrown exception can then be caught by the catch block, which then transfers the program control to the exception handler. The exception handler may then handle the thrown exception in a preconfigured manner. If no exception is thrown, the compiler ignores the exception handler, and continues compiling the program normally. As will also be appreciated by person skilled in the art, the portion of program for which exceptions are to be handled may include terms such as *throw',* which can be indicative of the presence of exceptions. Similarly, terms such as *'tray'* and *'catch',* may be used to indicate handling of thrown exceptions.

However, failure to define exception handlers in the program may cause runtime errors. For instance, at the time of writing a program a programmer may fail to ascertain that an exception may occur for a particular section of code of the program and may thus fail to define the exception in the program. In such a case, the compiler may fail to identify occurrence of an exception that has not been pre-defined in the program and may thus provide unexpected results or runtime errors. Further, the programmer may ascertain that an exception may occur for a particular section of code and identify the section of code with a throw keyword and a try block. The programmer may, however, inadvertently not define the exception handler for the section of code and the compiler may thus fail to handle the exception. Failure to define exception handler in the program may cause core dump or crash of the program.

Further, identifying and determining undefined exceptions may become a tedious work in case of a program such as a software tool, which includes on one or more programs as components, since the programmer writing the program is typically different from programmers who may have written the various components and may thus not be able to identify or define undefined exceptions in each of the various components. Failure to identify or define an exception in even a single component or in the program may thus lead to runtime crashing of the entire program.

According to an embodiment of the present subject matter, systems and methods for exception handling in a program written in a programming language are described. The systems and methods can be implemented in a variety of computing devices. The computing devices include, but are not limited to, desktop computers, hand-held devices, laptops or other portable computers, and the like. In one implementation, the systems and methods for exception handling may be provided for exception handling in programs written using programming languages including, but not limited to, C, C++, VC++, C#.

In one implementation, the program to be compiled may include one or more components, wherein each of the components implements one or more specific functionalities. In one example, the program may be a standalone program, wherein each of the components may be individual functions defined in the program. In another example, the program may be a software tool, wherein each of the components may be standalone programs integrated together with the help of interfaces, such as application programming interface (API). For the purpose of explanation, and not as a limitation, the present subject matter has been described in relation to a program as a software tool. In the program to be compiled, at least one component of the program is analyzed to determine one or more exceptions that are probable to occur in the component. Based on the determination, a list of all the exceptions in the component may be prepared. The list may then be used to update an exception specification associated with the component. In one implementation, the exception specification may include information, such as a list of exceptions associated with the component or a section of code within the component, for which the exception has been thrown in the component. In this manner, all exceptions that may occur can be detected and proper exception handling code can be implemented to ensure error-free program execution.

The update in the exception specification may then be used to update an interface header file of a component. An interface header file of a component generally includes interface(s), for example, the API associated with the component. The interface(s) help in integration between various components as well as integration of the various components with the program and thus facilitate smooth execution of the program. Generally, each component of a program has at least one interface associated with it. The interface header file of a component is thus updated with the update in the exception specification associated with the component along with the information for all the interfaces associated with the component. Further, interface header files of all the components of the program are updated with exception specifications corresponding to the interfaces associated with each of the components.

The updated interface header files may then be associated with the program. The program may be analyzed to identify undefined exception from among the one or more exceptions listed in the updated interface header files. Undefined exceptions may be understood as exceptions that have not been defined in the program, i.e., the exceptions that have been thrown in the component but not caught in the program. In one implementation, the interface header files associated with the components are analyzed to ascertain sections of code for which the one or more exceptions have been determined within the component. The program may then be analyzed, based on the ascertained sections of code, to identify the exceptions that have not been defined in the program. On identifying at least one undefined exception, an exception undefined report may be generated. In one implementation, the exception undefined report may include details like list of all undefined exceptions, the interfaces associated with the components to which the exceptions belong, and the section of code throwing the exception in the component. Based on the exception undefined report, all the undefined exceptions may be defined before compilation of the program by defining an exception handler for all the sections of code throwing the exception. For example, a try block and a catch block having an exception handler may be defined for the section of code throwing the exception.

In one implementation, the undefined exceptions may be defined by a system configured for handling exception, also referred to as an exception handling system. In another implementation, the undefined exceptions may be defined by the user. The exception handling system thus provides an efficient way of handling exceptions in a programming language. Exception identification capability of the exception handling system makes it useful in programming languages whose compilers are not configured for identification and definition of undefined exceptions.

Further, in one embodiment the updated exception specification may be retained in the interface header files after compilation and execution of the program. Retaining the updated exception specification facilitates faster execution of the program as each time the program is executed; only the newly added components would be analyzed to identify and define undefined exceptions, thus saving time and resources required for program execution. In another embodiment, the updated exception specification may not be retained so as to maintain the program in the original form.

Although the present subject matter has been described in relation to a program, such as a software tool or a software module prepared using one or more components, it will be understood that the exception handling system may be used for exception handling for a standalone program or any program having section(s) of code that may throw exceptions.

It should be noted that the description and figures merely illustrate the principles of the present subject matter. It will thus be appreciated that those skilled in the art will be able to devise various arrangements that, although not explicitly described or shown herein, embody the principles of the present subject matter and are included within its spirit and scope. Furthermore, all examples recited herein are principally intended expressly to be only for pedagogical purposes to aid the reader in understanding the principles of the present subject matter and the concepts contributed by the inventor(s) to furthering the art, and are to be construed as being without limitation to such specifically recited examples and conditions. Moreover, all statements herein reciting principles, aspects, and embodiments of the present subject matter, as well as specific examples thereof, are intended to encompass equivalents thereof.

It will also be appreciated by those skilled in the art that the words during, while, and when as used herein are not exact terms that mean an action takes place instantly upon an initiating action but that there may be some small but reasonable delay, such as a propagation delay, between the initial action and the reaction that is initiated by the initial action.

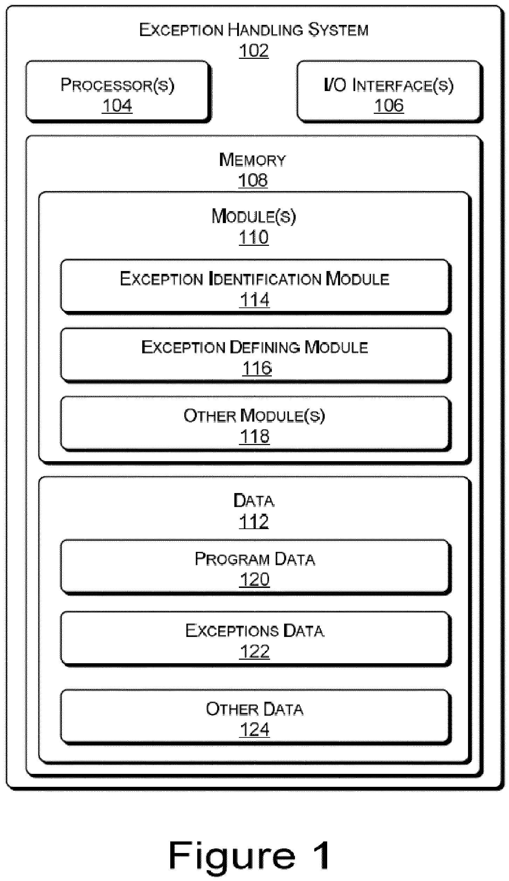

Figure 1 illustrates exemplary components of an exception handling system 102 for handling exceptions in a program written in a programming language, in accordance with an embodiment of the present subject matter. Examples of the exception handling system 102 include, but are not limited to, computing device such as mainframe computers, workstations, personal computers, desktop computers, minicomputers, servers, multiprocessor systems, and laptops; a cellular communicating device such as a personal digital assistant, a smart phone, and a mobile phone; and the like. The exception handling system 102, hereinafter referred to as the system 102, includes one or more processor(s) 104, I/O interface(s) 106, and a memory 108 coupled to the processor 104. The processor 104 can be a single processing unit or a number of units, all of which could also include multiple computing units. The processor 104 may be implemented as one or more microprocessors, microcomputers, microcontrollers, digital signal processors, central processing units, state machines, logic circuitries, and/or any devices that manipulate signals based on operational instructions. Among other capabilities, the processor 104 is configured to fetch and execute computer-readable instructions and data stored in the memory 108.

Functions of the various elements shown in the figures, including any functional blocks labeled as "processor(s)", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

The I/O interfaces 106 may include a variety of software and hardware interfaces, for example, interface for peripheral device(s), such as a keyboard, a mouse, an external memory, and a printer. Further, the I/O interfaces 106 may enable the system 102 to communicate with other computing devices, such as a personal computer, a laptop, and like.

The memory 108 may include any computer-readable medium known in the art including, for example, volatile memory such as static random access memory (SRAM) and dynamic random access memory (DRAM), and/or non-volatile memory, such as read only memory (ROM), erasable programmable ROM, flash memories, hard disks, optical disks, and magnetic tapes. The memory 108 also includes module(s) 110 and data 112.

The module(s) 110 include routines, programs, objects, components, data structures, etc., which perform particular tasks or implement particular abstract data types. The module(s) 110 further include an exception identification module 114, an exception defining module 116, and other module(s) 118. The other module(s) 118 may include programs or coded instructions that supplement applications and functions of the system 102.

On the other hand, the data 112, amongst other things, serves as a repository for storing data processed, received, and generated by one or more of the module(s) 110. The data 112 includes, for example, program data 120, exceptions data 122, and other data 124. The other data 124 includes data generated as a result of the execution of one or more modules in the other module(s) 118.

In one implementation, the system 102 is configured to compile and run programs written in various programming languages. Examples of such programming language include, but are not limited to C++, VC++, C#, etc. A program may be a standalone program or a software tool having one or more components, wherein each of the components implements one or more specific functionalities. As explained above these components may in themselves be standalone programs, software tools, software modules, functions, sections of codes and so on. In case of a standalone program, each of the components may be individual functions defined in the program. In case of a program being a software tool, each of the components may be standalone programs integrated together with the help of interfaces, such as an application programming interface (API).

In one embodiment, the system 102 is configured to identify and define exceptions in a program. The system 102 is configured to receive the program to be compiled. In one implementation, the received program comprising the various components is saved in a data storage, for example, the program data 120. Once the program is received, at least one component of the program is analyzed to determine one or more exceptions that may occur in the component. For the purpose, the exception identification module 114 of the system 102 analyzes the components associated with the program. Based on the determination, a list of all the exceptions in each component may be prepared.

In one implementation, the exceptions may be determined by analyzing the components to ascertain occurrences of one or more exception identification keywords within the component. For example, the exception identification module 114 may be configured to ascertain the occurrences of the exception identification keyword *'throw'* in C++. Similarly, in other programming languages similar exception identification keywords, used for same purpose as throw, may be determined. The exception identification module 114 is configured to analyze each section of code within a component to ascertain the occurrence of the exception identification keyword. For example, on ascertaining occurrence of the exception identification keyword in a section of code, the exception identification module 114 may update the comments section associated with the section of code to mark the presence of an exception in the section of code, i.e., to report that an exception has been thrown by the section of code. Similarly, absence of an exception may be marked in the comments section to report that no exception has been thrown by the section of code. The section of code may then be analyzed to determine whether an exception might occur for the marked section of code.

Further, the exception identification module 114 may be configured to analyze each component to identify sections of code that may have a common error, for example, an instruction for division by zero. On identification of a common error, the exception identification module 114 then determines whether an exception has been identified for the section of code, say, by ascertaining occurrence of the keyword. On determining that an exception has not been identified, the exception identification module 114 may then update the comments section associated with the section of code to report that the exception has not been identified for the section of code having the common error, i.e., no exception has been thrown for the section of code having the common error. Additionally or alternately, the exception identification module 114 may update the section of code, for which no exception has been thrown, by providing an appropriate command, say, *'throw ()*' in C++. Similarly, equivalent commands may be provided in other programming languages. The exception identification module 114 may then update the comments section accordingly. The exception identification module 114 may also generate an error report indicating that although common errors have been found in the component, but no exceptions have been thrown for the component. The component may then be reanalyzed, for example, by the user to verify a possibility of occurrence of exception for the component.

Comments provided in the comments section associated with each component may then be addressed, for example, by a user of the system 102. For example, a throw function may be defined for the section of code having the common error. Once the comments for all the components have been addressed, a list of all exceptions identified for the components may be prepared. In one implementation, the exception identification module 114 prepares a list of all the exceptions in a component and updates an exception specification associated with the component. Thereupon, exception specifications associated with all the components may be saved in the exceptions data 122. In one implementation, the exception specification may include information, such as a list of exceptions of the component and the section of code for which exception has been thrown in the component.

In another implementation, the exceptions may be determined by executing all the components of the program. In one implementation, the exception identification module 114 may be configured to execute all the components of the program. Upon execution, the components that fail to execute may be analyzed by the exception identification module 114 to ascertain whether the component failed due to an exception. Based on the ascertaining, the exceptions for the failed component may be determined. For example, a component that failed to execute may be analyzed by the exception identification module 114 to determine if the component failed due to an exception or any other run-time error. Based on the determination, the exception identification module 114 may identify the components that failed to execute due to an exception, for example, by determining the occurrence of the keyword 'throw' in the component. A list of all the exceptions identified for the components may be prepared by the exception identification module 114. Further, the list may be used by the exception identification module 114 to update the exception specification associated with the component. All exceptions thus identified may be used to update exception specification(s) associated with all the components. Exception specifications associated with all the components may be saved in the exceptions data 122.

In one implementation, the updated exception specification is used to update an interface header file of a component. An interface header file for a component generally includes the API(s) associated with the component. As explained earlier, each component of a program has at least one interface associated with it, which may help the component in integrating with other components and the program. The exception identification module 114 updates the interface header file for all the components of the program with exception specifications and information for all the interfaces associated with each of the components. The updated interface header files may be stored in a database, such as the program data 120.

The updated interface header files may then be associated with the program. The program is analyzed to ascertain whether all the exceptions listed in the header files have been defined or not, i.e., whether all the thrown exceptions have been caught in the program. In one implementation, the exception defining module 116 is configured to identify at least one undefined exception in the program and define the at least one undefined exception in the program. For the purpose, the exception defining module 116 may analyze the program to ascertain whether all the exceptions have been defined in the program.

The exception defining module 116 initially analyzes the list of all the exceptions listed in the exception specifications updated in the interface header files for all the components. As previously described, the exception specifications include information, such as list of exceptions of a component and the section of code for which exception has been thrown in the component. Based on the exception specifications, the exception defining module 116 identifies sections of code for which exception has been thrown in the component. The exception defining module 116 then analyzes the program to identify undefined exception from among the one or more exceptions listed in the interface header files. Undefined exceptions may be understood as exceptions that have not been defined in the program, i.e., the exceptions that have been thrown in the component but not caught in the program. For example, to identify an undefined exception, the exception defining module 116 may ascertain occurrences of exception definition keywords such as try and catch, in the program, for each section of code for which an exception has been thrown in the component.

Based on the ascertaining, a list of all undefined exceptions may be prepared by the exception defining module 116. In one implementation, the exception defining module 116 may generate an exception undefined report to provide a list of all the undefined exceptions. The exception undefined report may include, for example, details like list of all undefined exceptions, the interfaces to which the exceptions belong, the components associated with such interfaces, and the section of code throwing the exception in the component. The exception undefined report may be stored in the program data 120. Based on the exception undefined report, all the undefined exceptions may be defined by the exception defining module 116. In one implementation, the exception defining module 116 may define the undefined exceptions by assigning an exception handler for all the sections of code throwing the exception. For example, a try block and a catch block having the exception handler may be defined for the section of code throwing the exception. In another implementation, the exception undefined report may be provided to the user of the program who may then define the undefined exceptions in the program. The program, with all the exceptions identified and defined is provided to the compiler to compile the program. In one embodiment the system 102 includes the compiler for compiling the program. In another embodiment the compiler is an independent or standalone module associated with the system 102.

The present system 102 thus provides an efficient way of handling exceptions in a program written in programming language. Exception identification and definition capability of the system 102 ensures errorless execution of a program. Exception identification capability of the system 102 makes it highly useful in programming languages whose compilers are not configured for identification and definition of undefined exceptions. Further, the exception defining capability of the system 102 provide for an automated and reliable system for removal of errors related to undefined exceptions.

Further, in one embodiment the exception specifications updated by the system 102, i.e., updated exception specifications may be retained in the interface header files after compilation and execution of the program. For example, the updated exception specifications may be stored in the program data 120 such that the updated exception specifications associated with a particular program may be referred each time the particular program is executed. Retaining the updated exception specification facilitates faster execution of the program, as only newly added components, for example, components added post-compilation would be analyzed to identify and define undefined exceptions each time the program is executed, thus saving time and resources required for program execution. In another embodiment, the updated exception specification may not be retained so as to maintain the program in the original form.

Although the present system 102 has been defined as the computing device having an integral compiler, it will be understood that the system 102 may be a computing device separate from a user computing device having a compiler and may be interfaced with the user computing device for exception handling. Further, the system 102 may be implemented as a plug-in device which may be interfaced with the user computing device having a compiler.

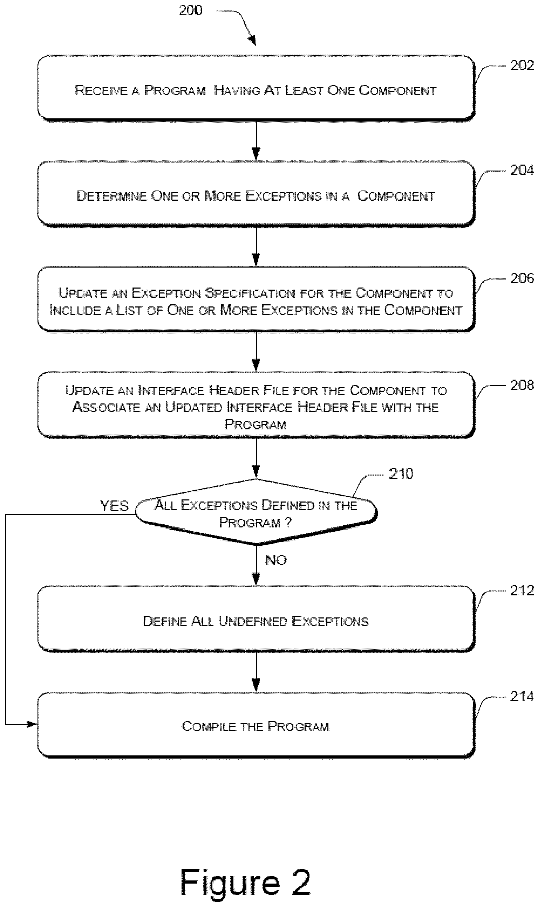

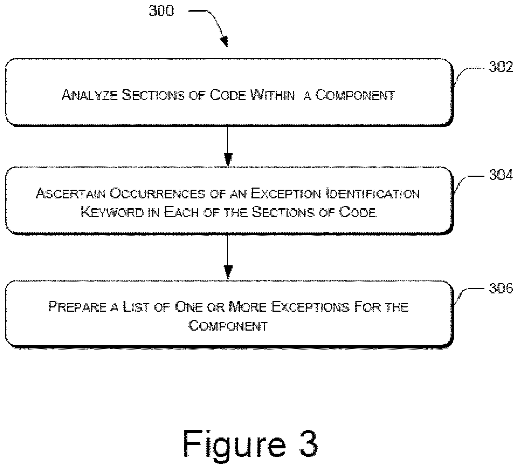

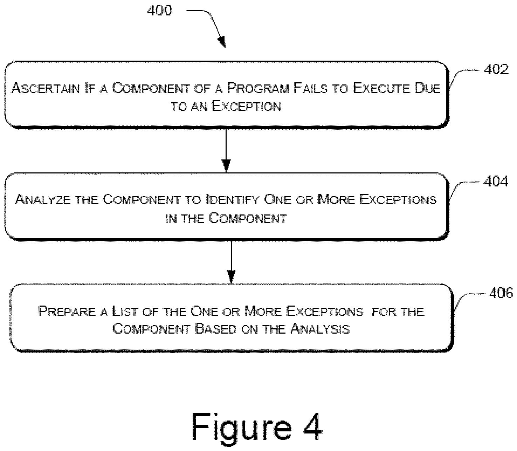

Figure 2 illustrates exemplary method 200 for handling exceptions in a program written in a programming language, while Figure 3 and Figure 4 illustrate methods 300 and 400 for identifying exceptions in a programming language, in accordance with an embodiment of the present subject matter. Although the methods 200, 300, and 400 as described in Figure 2, Figure 3, and Figure 4 are described for handling exceptions in a program, such as a software tool or a software module prepared using one or more components, it will be understood that the exception handling system 102 may be used for exception handling for a standalone program without deviating from the scope of the present subject matter.

The order in which the methods 200, 300, and 400 are described is not intended to be construed as a limitation, and any number of the described method blocks can be combined in any order to implement the methods, or alternative methods. Additionally, individual blocks may be deleted from the methods without departing from the spirit and scope of the subject matter described herein. Furthermore, the methods can be implemented in any suitable hardware, software, firmware, or combination thereof.

A person skilled in the art will readily recognize that steps of the methods 200, 300 and 400 can be performed by programmed computers. Herein, some embodiments are also intended to cover program storage devices, for example, digital data storage media, which are machine or computer readable and encode machine-executable or computer-executable programs of instructions, wherein said instructions perform some or all of the steps of the described methods. The program storage devices may be, for example, digital memories, magnetic storage media, such as a magnetic disks and magnetic tapes, hard drives, or optically readable digital data storage media. The embodiments are also intended to cover both communication network and communication devices configured to perform said steps of the exemplary methods.

Referring to Figure 2, illustrating the method 200, at block 202, a program having at least one component is received. For example, a system for exception handling, such as the system 102 receives a program to be compiled. In one implementation, the received program includes at least one component, wherein each of the at least one component implements one or more specific functionalities. The received program and the associated components may then be saved in a data repository, for example, the program data 120.

At block 204, each of the at least one component of the program is analyzed to determine one or more exceptions in a component. For example, the exception identification module 114 of the system 102 analyzes a component of the program. Based on the determination, a list of one or more exceptions in the component may be prepared.

At block 206, an exception specification for the component is updated to include a list of one or more exceptions that may occur in the component. For example, the exception identification module 114 updates an exception specification associated with the component to include the list of all exceptions that may occur in the component. The exception identification module 114 updates an exception specification associated with the component which may then be saved in a data repository for example, the exceptions data 122. In one implementation, the exception specification may include information, such as a list of exceptions of a component and the section of code for which exception has been thrown in the component.

At block 208, an interface header file for the component is updated to associate an updated interface header file with the program. In one implementation, the exception identification module 114 updates the interface header file of a component with the exception specification associated with the component along with information of all the interfaces associated with the component. The interface header file of the component may then be updated and stored in a database, such as the program data 120. Further, the updated interface header file may be associated with the program.

At block 210, a determination is made to ascertain whether all the exceptions have been defined in the program. Any undefined exception, i.e., exceptions that have not been defined in the program, may be identified. For example, the exception defining module 116 analyzes the program to ascertain whether the one or more exceptions have been defined in the program. In one implementation, the exception defining module 116 analyzes the interface header file to identify one or more exceptions thrown by the component and the corresponding sections of code within the component in which the exceptions may be thrown. The program may then be analyzed to identify the exceptions that have not been defined in the program. For example, occurrences of exception definition keywords such as *try* and *catch,* may be ascertained in the program for each section of code for which an exception has been thrown in the component. If the exception defining module 116 identifies at least one undefined exception in the program, which is the 'No' path from the block 210, it defines all undefined exceptions at block 212. In one implementation, the exception defining module 116 may define the undefined exceptions by defining an exception handler for all the sections of code throwing the exception. For example, a try block and a catch block having an exception handler may be defined for the section of code throwing the exception. From the block 212, the method proceeds to block 214.

In case it is determined that all the exceptions have been defined in the program, which is the 'Yes' path from the block 210, the program is compiled at the block 214. Thus all the exceptions in the program are identified and defined automatically before the compilation of the program facilitating error-free compilation and execution of the program.

Figure 3 illustrates a method 300 for determining exceptions in a program, in accordance with an embodiment of the present subject matter.

At block 302, sections of code within a component of a program are analyzed. In one implementation, the exception identification module 114 of the system 102 analyzes the section of code within the component of the program to identify one or more exceptions in the component.

At block 304, an exception identification keyword is ascertained in each of the sections of code. For example, a section of code within a component may be analyzed to determine occurrence of the one or more exception identification keywords. In one implementation, the exception identification module 114 may determine the occurrences of the exception identification keyword *'throw'* in C++. It will be understood that similar exception identification keywords, used for same purpose as throw, may be determined in other programming languages.

At block 306, a list of one or more exceptions for the component is generated. For example, the exception identification module 114 may prepare a list of one or more exceptions for the component. Further, an exception specification may be updated based on the list of one or more exceptions.

Figure 4 illustrates another method 400 for identifying exceptions in a program, according to an embodiment of the present subject matter.

At block 402, it is ascertained if a component of a program fails to execute due to an exception. In one implementation, the exception identification module 114 of the system 102 executes the component and if the component fails due to occurrence of an exception, it is identified. In one implementation, the exception identification module 114 of the system 102 analyzes all the failed components to determine one or more components that failed to execute due to an exception. Based on the analysis a list of all components having an exception may be prepared.

At block 404, the component is analyzed to identify one or more exceptions in the component due to which the component failed to execute. For example, the exception identification module 114 may analyze each section of code within the component to determine occurrence of one or more exception identification keywords. In one implementation, the exception identification module 114 may determine the occurrences of the exception identification keyword *'throw'* in C++.

At block 406, a list of the one or more exceptions for the component is prepared. For example, the exception identification module 114 may prepare a list of one or more exceptions based on the analysis of the section of code for the component. Further, an exception specification may be updated based on the list of one or more exceptions. Exception specifications associated with the component may then be saved in a database, for example, the exceptions data 122.

The methods 300 and 400 thus describe embodiments for identifying exceptions in a program. Based on the identified exceptions, the program may be analyzed to identify and define undefined exceptions in the program. Further, the undefined exceptions may be defined by defining an exception handler in the program as described in context of the method 200. The above described methods provide an efficient way of handling exceptions in a program thus facilitating in errorless execution of a program. Further, the methods for exception identification are useful in programming languages whose compilers are not configured for identification and definition of undefined exceptions.

Although implementations for exception handling in a program have been described in language specific to structural features and/or methods, it is to be understood that the appended claims are not necessarily limited to the specific features or methods described. Rather, the specific features and methods are disclosed as exemplary implementations for exception handling.

## Claims

1. A method for handling exceptions in a program, the method comprising:
determining one or more exceptions in at least one component of the program;
analyzing an interface header file associated with the at least one component to ascertain sections of code, of the at least one component, for which the one or more exceptions have been determined;
identifying at least one undefined exception from among the one or more exceptions based on the analyzing; and
defining an exception handler for the at least one undefined exception in the program based on identifying.

2. The method as claimed in claim 1, wherein the determining comprises analyzing the sections of code within the at least one component to ascertain occurrence of an exception identification keyword in the sections of code.

3. The method as claimed in claim 1, wherein the determining comprises:
executing each of the at least one component; and
ascertaining if a component from among each of the at least one component fails to execute due to an exception.

4. The method as claimed in claim 1, wherein the identifying comprises ascertaining, in the program, occurrence of an exception definition keyword for each of the sections of code.

5. The method as claimed in claim 4, further comprises generating, based on the ascertaining, an exception undefined report having a list of undefined exceptions.

6. The method as claimed in claim 1, further comprises:
updating an exception specification, for the at least one component, to include a list of the one or more exceptions in the at least one component; and
updating the interface header file associated with the at least one component based on the exception specification associated with the at least one component.

7. An exception handling system (102) comprising:
a processor (104); and
a memory (108) coupled to the processor, the memory comprising:
an exception identification module (114) configured to determine one or more exceptions in at least one component of a program; and
an exception defining module (116) configured to define in the program at least one undefined exception from among the one or more exceptions.

8. The exception handling system (102) as claimed in claim 7, wherein the exception defining module (116) is further configured to identify the at least one undefined exception in the program from among the one or more exceptions.

9. The exception handling system (102) as claimed in claim 8, wherein the exception defining module (116) is further configured to generate an exception undefined report having a list of undefined exceptions based on the identification.

10. The exception handling system (102) as claimed in claim 7, wherein the exception defining module (116) is further configured to:
analyze an interface header file associated with the at least one component to ascertain sections of code, of the at least one component, for which the one or more exceptions have been determined; and
ascertain, in the program, occurrences of an exception definition keyword for each of the sections of code.

11. The exception handling system (102) as claimed in claim 7, wherein the exception defining module (116) is further configured to:
define a try block and a catch block for a section of code, of the at least one component, throwing the at least one undefined exception; and
define an exception handler associated with the catch block for handling the at least one undefined exception.

12. The exception handling system (102) as claimed in claim 7, wherein the exception identification module (114) is further configured to ascertain occurrences of an exception identification keyword in a section of code within the at least one component.

13. The exception handling system (102) as claimed in claim 12, wherein the exception identification module (114) is further configured to update a comments section associated with the section of code based on the ascertaining.

14. The exception handling system (102) as claimed in claim 7, wherein the exception identification module (114) is further configured to ascertain if a component from among each of the at least one component fails to execute due to an exception.

15. The exception handling system (102) as claimed in claim 7, wherein the exception identification module (114) is further configured to update an exception specification, for the at least one component, to include a list of the one or more exceptions in the at least one component corresponding to the exception specification.

16. A computer-readable medium having embodied thereon a computer program for executing a method comprising:
determining one or more exceptions in at least one component of a program;
identifying at least one undefined exception in the program from among the one or more exceptions; and
defining the at least one undefined exception in the program.

17. The computer readable medium as claimed in claim 16, wherein the defining further comprises assigning an exception handler for handling the at least one undefined exception.

18. The computer readable medium as claimed in claim 16, wherein the defining further comprises defining a try block and a catch block for a section of code, of the at least one component, throwing the at least one undefined exception.

19. The computer readable medium as claimed in claim 16, wherein the determining further comprises:
analyzing a section of code within the at least one component to ascertain occurrences of an exception identification keyword in the section of code based on the analyzing.

20. The computer readable medium as claimed in claim 16, wherein the identifying further comprises:
analyzing an interface header file associated with the at least one component to ascertain sections of code, of the at least one component, for which the one or more exceptions have been determined; and
ascertaining, in the program, occurrence of an exception definition keyword for the section of code.
